# FASCICULE DE BREVET EUROPEEN

(11) **EP 4 589 145 B1**
(45) Date de publication et mention de la délivrance du brevet: **04.11.2026**
(21) Numéro de dépôt: 24219848.9
(22) Date de dépôt: 13.12.2024
(51) Int. Cl.: F04B 15/08, F17C 5/02, F17C 5/06, F17C 9/02, F04B 3/00, F04B 23/02

(54) **APPAREIL ET PROCÉDÉ DE COMPRESSION DE FLUIDE**
VORRICHTUNG UND VERFAHREN ZUR FLUIDVERDICHTUNG
APPARATUS AND METHOD FOR COMPRESSING FLUID

(30) Priorité: 22.01.2024 FR 2400587
(43) Date de publication de la demande: 23.07.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ABDO, Youssef, 78350 JOUY-EN-JOSAS (FR); COLEIRO, Gaetan, 38360 SASSENAGE (FR); BENISTAND-HECTOR, Cyril, 38360 SASSENAGE (FR)
(74) Mandataire: Air Liquide

(56) Documents cités:
- EP-A1- 2 687 793
- FR-A1- 3 107 572
- FR-A1- 3 107 573
- FR-A1- 3 115 569
- JP-A- 2012 163 105

## Description

L'invention concerne un appareil et un procédé de compression de fluide.

L'invention concerne plus particulièrement un appareil de compression de fluide à plusieurs étages de compression comprenant une enceinte étanche et destinée à contenir un bain de fluide cryogénique comportant une phase liquide, la partie supérieure de l'enceinte étant destinée à contenir un ciel gazeux, une première chambre de compression, une seconde chambre de compression, un système d'admission communiquant avec la première chambre de compression configuré pour permettre l'entrée de fluide à comprimer dans ladite première chambre de compression, un système de transfert communiquant avec la première et la seconde chambre de compression et configuré pour permettre le transfert de fluide de la première chambre de compression vers la seconde chambre de compression, un piston mobile pour assurer la compression du fluide dans les première et seconde chambres de compression, l'appareil comprenant en outre un orifice d'évacuation communiquant avec la seconde chambre de compression et configuré pour permettre la sortie de fluide comprimé, la seconde chambre de compression étant délimitée par une portion du corps du piston et une paroi fixe de l'appareil, le piston étant mobile en translation selon une direction longitudinale, dans lequel le système d'admission comprend un ou plusieurs clapets configuré(s) pour assurer l'entrée de fluide à comprimer dans la première chambre de compression lors d'une phase d'admission et empêcher la sortie de fluide en phase de compression, l'appareil comprenant en outre un orifice d'évacuation permettant une communication entre la première chambre de compression et de bain pour laisser sortir un surplus de liquide emprisonné dans la première chambre de compression lors d'un mouvement de compression du piston dans la première chambre de compression.

Pour augmenter les performances et le rendement volumétrique des pompes d'hydrogène liquide, il est indispensable d'avoir une bonne qualité thermodynamique du liquide à l'admission. Ceci pour éviter la cavitation par perte de charge et par entrée thermique. La compression à haute pression du liquide aspiré d'un réservoir contenant la pompe (bain ou « sump» en anglais) est souvent précédée d'un premier étage de compression (ou pré-compression). Cette pré-compression est généralement un étage de compression à plus faible taux que le second étage de compression. Ce premier étage de compression aspire du liquide quasi-saturé à la température de saturation du bain et le sousrefroidit mécaniquement par pressurisation afin de réaliser un bon remplissage sans vaporisation « flash » au niveau de l'étage de compression.

Dans le cas où les deux étages de compression sont réalisés par des mouvements opposés d'un même piston, la phase de remplissage du deuxième étage de compression se déroule donc en même temps que la compression dans le premier étage.

Les diamètres des chambres étant différents mais la course de piston identique, les volumes balayés peuvent donc être différents (typiquement le volume du premier étage est plus important que celui du deuxième étage). En supposant que la densité du fluide reste relativement constante (car peu de compressibilité en absence de vaporisation flash) pendant l'admission dans le deuxième étage, il peut être indispensable d'évacuer une partie du liquide pressurisé hors de la première chambre de compression.

Il est connu de prévoir des lumières ou canaux faisant communiquer la première chambre de compression et le bain pour évacuer naturellement ce surplus de fluide vers le bain.

Cette solution n'est pas complétement satisfaisant. Cette évacuation de liquide en excès du premier étage de compression peut générer du gaz de vaporisation dans le bain.

Le document FR3107573A1 décrit un appareil conforme au préambule de la revendication 1. Le document FR3115569A1 décrit un appareil de compression muni d'une entretoise empêchant la communication fluidique entre sa chambre de compression et un orifice d'évacuation lors de la compression.

Un but de la présente invention est de pallier tout ou partie des inconvénients de l'art antérieur relevés ci-dessus.

A cette fin, l'appareil selon l'invention, par ailleurs conforme à la définition générique qu'en donne le préambule ci-dessus, est essentiellement caractérisé en ce qu'il comporte un clapet d'évacuation configuré pour contrôler l'évacuation de liquide via l'orifice d'évacuation et pour empêcher l'entrée de fluide dans la chambre de compression via l'orifice d'évacuation.

Par ailleurs, des modes de réalisation de l'invention peuvent comporter l'une ou plusieurs des caractéristiques suivantes :
- le clapet d'évacuation est un clapet anti-retour, par exemple comprenant un obturateur sollicité par un ressort,
- l'orifice d'évacuation communique avec l'enceinte via un ralentisseur de flux configuré pour atténuer la vitesse et/ou l'intensité du flux de liquide évacué en limitant sa perte de charge,
- le ralentisseur de flux comprend au moins l'un parmi une buse de matériau poreux, un ensemble de trous de diffusion,
- l'orifice d'évacuation communique avec l'enceinte via au moins un conduit d'évacuation débouchant dans l'enceinte dans le bain pour être situé dans et/ou au-dessus du bain de l'enceinte,
- le conduit d'évacuation comporte une portion s'étendant dans l'enceinte parallèlement à la direction longitudinale et/ou transversalement à la direction longitudinale,
- le conduit d'évacuation s'étend du bas vers le haut de l'enceinte,
- l'orifice d'évacuation communique avec l'enceinte via plusieurs conduits d'évacuation débouchant dans l'enceinte,
- le récipient contient un bain constitué de liquide cryogénique, par exemple d'hydrogène liquéfié.

L'invention concerne également un procédé de pompage de fluide cryogénique utilisant un tel appareil dans lequel le récipient contient un bain de fluide cryogénique liquéfié, le procédé comprenant, simultanément lors d'un premier mouvement du piston, une étape d'admission de liquide dans la première chambre de compression via le système d'admission et une étape de compression de fluide dans la seconde chambre de compression, puis, lors d'un second mouvement opposé du piston, une étape d'admission de fluide dans la seconde chambre de compression via le système de transfert et une étape de compression du fluide dans la première chambre de compression durant laquelle un surplus de fluide est évacué de la première chambre de compression via l'orifice d'évacuation.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :
[Fig. 1] est une vue en coupe verticale, schématique et partielle, illustrant un premier exemple de réalisation d'un appareil selon l'invention,
[Fig. 2] est une vue en coupe verticale, schématique et partielle, illustrant un deuxième exemple de réalisation d'un appareil selon l'invention,
[Fig. 3] est une vue en coupe verticale, schématique et partielle, illustrant un troisième exemple de réalisation d'un appareil selon l'invention,
[Fig. 4] est une vue en coupe verticale, schématique et partielle, illustrant un quatrième exemple de réalisation d'un appareil selon l'invention,
[Fig. 5] est une vue en coupe verticale, schématique et partielle, illustrant un cinquième exemple de réalisation d'un appareil selon l'invention,
[Fig. 6] est une vue en coupe verticale, schématique et partielle, illustrant un sixième exemple de réalisation d'un appareil selon l'invention,
[Fig. 7] est une vue en coupe verticale, schématique et partielle, illustrant un septième exemple de réalisation d'un appareil selon l'invention,
[Fig. 8] est une vue en coupe verticale, schématique et partielle, illustrant un huitième exemple de réalisation d'un appareil selon l'invention.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

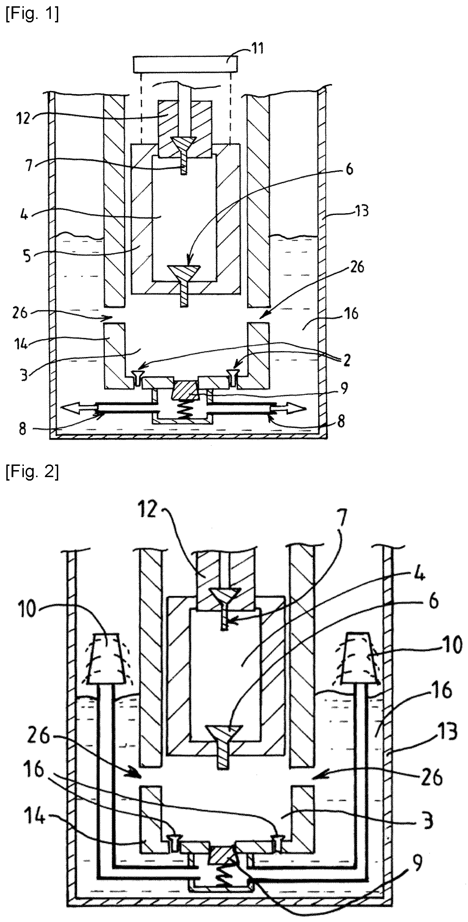

L'appareil 1 de compression de fluide représenté à la [Fig. 1] comprend deux étages de compression en série réalisés par un même piston 5 entraîné dans un mouvement alternatif par un organe moteur 11.

L'appareil 1 comprend en particulier une première chambre 3 de compression (à relative basse pression) et une seconde chambre 4 de compression (à relative haute pression).

L'appareil 1 comprend un système 2 d'admission communiquant avec la première chambre 3 de compression et qui est configuré pour permettre l'entrée de fluide à comprimer dans ladite première chambre 3 de compression.

Le système 2 d'admission comprend par exemple au moins l'un parmi: un ou plusieurs clapets anti-retour, un ou plusieurs orifices ou lumière(s), au moins un clapet à disque plat ou tout autre dispositif ou vanne permettant l'entrée de fluide à comprimer dans la première chambre 3 de compression lors d'une phase d'admission (ici remontée du piston 5) et empêchant la sortie de fluide en phase de compression (ici descente du piston 5).

En particulier, ce système 2 d'admission (clapet(s) et/ou autre) peut être configuré pour s'ouvrir en cas de différentiel de pression déterminé entre ses deux extrémités. De plus, la première chambre 3 peut éventuellement être équipée d'une soupape ou autre élément de sécurité configuré pour limiter la pression au sein de la chambre en dessous d'un seuil de sécurité déterminé.

L'appareil 1 comprend également un système 6 de transfert anti retour communiquant avec la première 3 et la seconde 4 chambre de compression et configuré pour permettre le transfert de fluide de la première chambre 3 de compression vers la seconde 4 chambre de compression (lors et/ou en fin de phase de compression du fluide dans la première chambre 3 de compression) mais qui reste fermé lors de la phase de compression dans la seconde chambre 4 de compression. Ce système 6 de transfert peut être du même type que celui du système 2 d'admission.

L'appareil 1 comprend un piston 5 mobile en translation pour assurer la compression du fluide dans les première 3 et seconde 4 chambres de compression (comme détaillé ci-dessus et ci-après).

L'appareil 1 comprend en outre un premier orifice 7 d'évacuation communiquant avec la seconde chambre 4 de compression et configuré pour permettre la sortie de fluide comprimé à haute pression de la seconde chambre 4 de compression (pendant ou en fin de phase de compression dans cette chambre 4). Le premier orifice 7 d'évacuation peut être pourvu d'un système anti-retour qui peut être du même type que celui du système 2 d'admission (par exemple ferme tant que le différentiel de pression entre la seconde chambre 4 de compression et l'extérieur est inférieur à un seuil déterminé).

Comme illustré, la seconde 4 chambre de compression peut être délimitée par une portion du corps du piston 5 et une paroi fixe de l'appareil. Le piston 5 est mobile en translation selon une direction A longitudinale, par exemple verticale en configuration d'utilisation.

Comme illustré, le piston 5 comporte par exemple une portion tubulaire montée autour d'un guide 12 central fixe. Une extrémité terminale du guide 12 central forme par exemple une paroi fixe délimitant une partie de la seconde chambre 4 de compression. L'appareil 1 comprend un système d'étanchéité (non représenté par souci de simplification) formé entre le guide 12 central et le piston 5 (segment(s), joint(s) ou autre). Selon la direction A longitudinale de translation du piston 5, le système 2 d'admission est de préférence situé à une première extrémité de l'appareil 1, le premier orifice 7 d'évacuation étant situé à une seconde extrémité de l'appareil et le système 6 de transfert est situé entre le système 2 d'admission et le premier orifice 7 d'évacuation.

Le premier orifice 7 d'évacuation peut être situé au niveau de l'extrémité inférieure du guide 12 central (extrémité supérieure fixe de la seconde chambre 4 de compression). L'appareil 1 peut comprendre une conduite d'évacuation du gaz comprimé comprenant une première extrémité inférieure reliée à ce premier orifice 7 d'évacuation et une seconde extrémité supérieure située en partie supérieure de l'appareil 1 pour collecter le fluide à haute pression comprimé.

Comme illustré, une extrémité du piston 5 forme une surface mobile de compression du fluide dans la première 3 chambre de compression tandis que la portion tubulaire du piston 5 forme une chemise mobile qui coopère avec l'extrémité terminale du guide 12 central pour former un système à compression du fluide dans la seconde 4 chambre de compression (dans ce second étage de compression l'extrémité terminale du guide 12 central forme ainsi un piston fixe coopérant avec une chemise mobile).

Comme illustré, la première chambre 3 de compression peut être formée dans une cavité 14 tubulaire ou chambre fixe qui est close à son extrémité inférieure. La première chambre 3 de compression peut être délimitée ainsi en partie inférieure par cette cavité 14 inférieure fixe. Le système 2 d'admission peut être situé à une extrémité inférieure de la cavité 14 inférieure.

La première chambre 3 de compression peut être délimitée ainsi en partie supérieure par une extrémité inférieure du piston 5 et un système d'étanchéité (segments ou autre) formé entre le piston 5 et une paroi de la cavité 14 inférieure.

De préférence, la première chambre 3 de compression est configurée pour favoriser l'échappement du gaz par les lumières ou clapets. Par exemple, comme schématisé, une ou plusieurs lumières 26 (ou orifices) peuvent être ménagées dans la partie supérieure de la cavité 14 inférieure (ou toute portion de paroi fixe délimitant au moins une partie de la première chambre 3 de compression). Ces lumières 26 peuvent être prévues pour que, lorsque le piston 5 les découvre (piston 5 au-dessus d'au moins une partie des lumières 26) la communication entre la première chambre 3 de compression et l'extérieur. Ainsi, en phase d'admission (agrandissement de la chambre 3), du gaz éventuellement présent dans la première chambre 3 de compression peut s'échapper par ces lumières 26 et laisser sa place à du liquide du bain environnant. Ceci assure un remplissage totalement liquide à l'admission. De plus, en phase de compression (piston 3 plongeant dans la seconde chambre 3 de compression) ces lumières 26 peuvent laisser échapper le surplus de liquide en dosant le volume de liquide qui y sera emprisonné (ce volume peut être déterminé par la position longitudinale des lumières 26). Puis le piston 5 continue sa course de compression dans la première chambre 3 de compression et les lumières 26 ne communiquent plus avec le volume comprime (qui est isole du bain 16).

Comme illustré, l'appareil 1 de compression peut comprendre une enceinte 13 étanche isolée thermiquement et contenant un bain 16 de fluide cryogénique de refroidissement. En particulier, la première 3 et la seconde 4 chambres de compression peuvent être immergées dans une phase liquide. La partie supérieure de l'enceinte 16 peut comporter un ciel gazeux qui récupère les éventuelles fuites dans l'appareil 1.

L'appareil 1 de compression comprend en outre un second orifice 8 d'évacuation permettant une communication fluidique entre la première chambre 3 de compression et de bain 16 et configuré pour laisser sortir un surplus de liquide emprisonné dans la première chambre 3 de compression lors d'un mouvement de compression du piston 5 dans la première chambre (3) de compression.

Un clapet 9 d'évacuation est prévu pour contrôler l'évacuation de liquide via le second orifice 8 d'évacuation et pour empêcher l'entrée de fluide dans la chambre 3 de compression via le second orifice 8 d'évacuation.

Le clapet 9 d'évacuation est par exemple un clapet anti-retour, par exemple comprenant un obturateur sollicité par un ressort vers une position de fermeture sur un siège.

Comme illustré aux [Fig. 2] et suivantes, le second orifice 8 d'évacuation communique de préférence avec l'enceinte 13 via un ralentisseur 10 de flux configuré pour atténuer la vitesse et/ou l'intensité du flux de liquide évacué en limitant sa perte de charge.

Le ralentisseur 10 est de préférence configuré pour réduire l'effet de pertes de charge à cause de la diffusion ou du frottement ou des chocs violents dus à des jets vigoureux évacués. Le ralentisseur « casse » de tels jets.

Un tel ralentisseur 10 produit une évacuation non brusque qui perd de sa vitesse mais qui la convertit en pression plutôt qu'en perte de charges. Ceci limite les frottements ou les éventuelles éclaboussures de liquide vers des zones chaudes de la paroi du bain d'aspiration pouvant provoquer son évaporation.

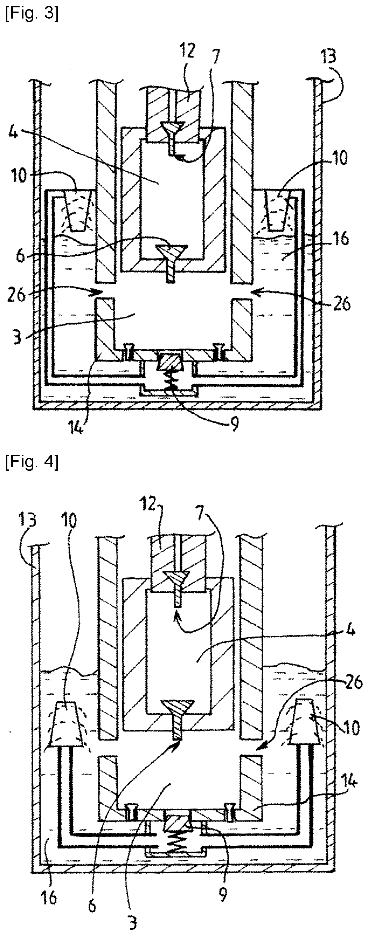

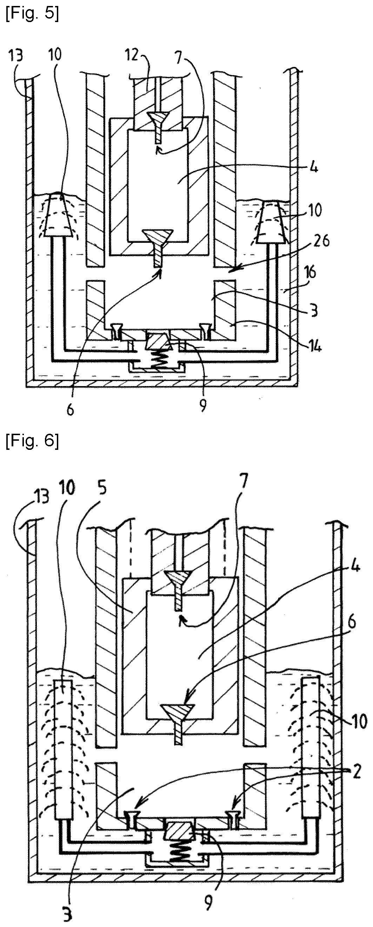

Le ralentisseur 10 de flux peut comprendre par exemple une buse de matériau poreux cf. [Fig. 2], [Fig. 3], [Fig. 4] et [Fig. 5]. Par exemple, des matériaux frittés poreux peuvent comprendre : un fritté en bronze ou Inox, par exemple de forme cylindrique ou conique. La longueur peut être comprise entre 15mm et 350mm. Le diamètre peut être compris entre 10mm et 45mm. La perméabilité peut être supérieure à cinq darcy (>5D, un darcy étant égal à 10⁻¹²m².

Ceci permet de « briser » le jet évacué sans perte de charge tout en réduisant le contact du liquide proche de saturation avec des parties ou de la vapeur potentiellement plus chaude du bain 16.

Comme illustré, le second orifice 8 d'évacuation peut communiquer avec l'enceinte 13 via au moins un conduit d'évacuation (deux dans les exemples illustrés) débouchant dans l'enceinte 13.

Le ou les conduits d'évacuation peuvent s'étendre
- horizontalement et déboucher par exemple en partie inférieure du récipient, dans le bain liquide cf. [Fig. 1],
- horizontalement puis verticalement vers le haut déboucher par exemple en partie inférieure du récipient, dans le bain liquide cf. [Fig. 4],
- horizontalement puis verticalement et déboucher par exemple à la jonction entre le bain liquide et le ciel gazeux cf. [Fig. 5],
- horizontalement puis verticalement et déboucher par exemple au-dessus du bain liquide et le ciel gazeux cf. [Fig. 2] et [Fig. 3].

Dans le cas où un ralentisseur 10 est prévu, celui-ci est de préférence prévu au niveau de l'extrémité aval du conduit d'évacuation (dans le récipient/bain).

Ainsi, comme illustré les extrémités des conduits 10 d'évacuation peuvent être orientées vers les haut ou vers le bas ou horizontalement.

En particulier, il est possible d'orienter le ou les conduits 10 d'évacuation à la verticale afin de réduire le contact entre les bulles potentielles et le liquide du bain 16. De cette manière les bulles se dirigent plutôt vers le haut du bain et donc vers le ciel gazeux tandis que le liquide se déverse dans la phase liquide.

Dans le cas d'une évacuation dans la partie gazeuse, l'écoulement de liquide évacué peut ruisseler et se déverser lentement dans la phase liquide. De cette manière l'échange thermique est limité entre la phase liquide et la phase gazeuse. Comme illustré, les deux conduits d'évacuation peuvent être reliés au même clapet 9 d'évacuation via une chambre commune.

Dans la variante de la [Fig. 6] le ralentisseur 10 comprend ou est constitué d'un tube à surface poreuse qui s'étend verticalement dans le récipient 13.

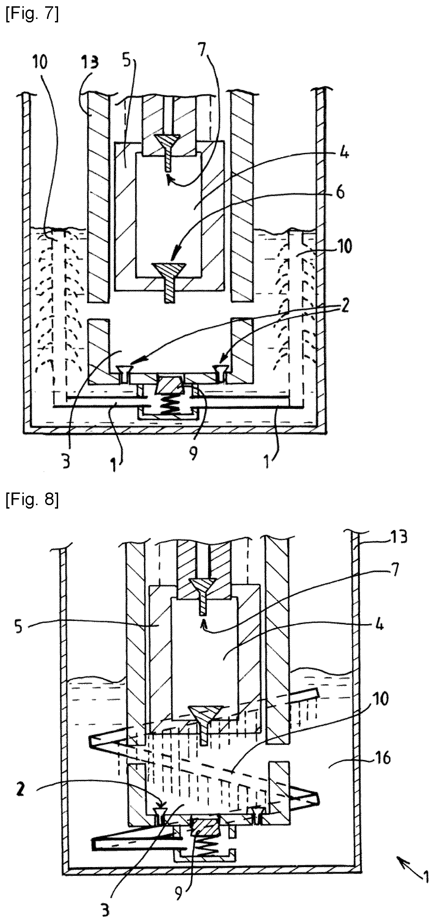

Dans la variante de la [Fig. 7], le ralentisseur 10 comprend ou est constitué d'un tube percé d'un multitude d'orifices pour permettre le ruissellement du liquide. Par exemple les orifices ont des dimensions comprises entre 0,05mm et 1mm.

Dans la variante de la [Fig. 8], le ralentisseur 10 comprend ou est constitué d'un tube percé d'un multitude d'orifices arrangé en serpentin autour des deux chambres de compression. L'invention est particulièrement avantageuse pour le pompage d'hydrogène par exemple pour produire un flux d'hydrogène à très haute pression en sortie du deuxième étage de compression (pression entre 100 et 1000bar par exemple).

## Revendications

1. Appareil (1) de compression de fluide à plusieurs étages de compression comprenant une enceinte (13) étanche et destinée à contenir un bain (16) de fluide cryogénique comportant une phase liquide, la partie supérieure de l'enceinte (13) étant destinée à contenir un ciel gazeux, une première chambre (3) de compression, une seconde chambre (4) de compression, un système (2) d'admission communiquant avec la première chambre (3) de compression configuré pour permettre l'entrée de fluide à comprimer dans ladite première chambre (3) de compression, un système (6) de transfert communiquant avec la première (3) et la seconde (4) chambre de compression et configuré pour permettre le transfert de fluide de la première chambre (3) de compression vers la seconde (4) chambre de compression, un piston (5) mobile pour assurer la compression du fluide dans les première (3) et seconde (4) chambres de compression, l'appareil (1) comprenant en outre un premier orifice (7) d'évacuation communiquant avec la seconde chambre (4) de compression et configuré pour permettre la sortie de fluide comprimé, la seconde (4) chambre de compression étant délimitée par une portion du corps du piston (5) et une paroi fixe de l'appareil, le piston (5) étant mobile en translation selon une direction (A) longitudinale, dans lequel le système (2) d'admission comprend un ou plusieurs clapets (2) configuré(s) pour assurer l'entrée de fluide à comprimer dans la première chambre (3) de compression lors d'une phase d'admission et empêcher la sortie de fluide en phase de compression, l'appareil comprenant en outre un second orifice (8) d'évacuation permettant une communication entre la première chambre (3) de compression et le bain (16) pour laisser sortir un surplus de liquide emprisonné dans la première chambre (3) de compression lors d'un mouvement de compression du piston (5) dans la première chambre (3) de compression, l'appareil étant **caractérisé en ce qu'**il comporte un clapet (9) d'évacuation configuré pour contrôler l'évacuation de liquide via le second orifice (8) d'évacuation et pour empêcher l'entrée de fluide dans la chambre (3) de compression via le second orifice (8) d'évacuation et **en ce que** le second orifice (8) d'évacuation communique avec l'enceinte (13) via au moins un conduit d'évacuation débouchant dans l'enceinte (13) dans le bain (16) pour être situé dans et/ou au-dessus du bain de l'enceinte (13).

2. Appareil selon la revendication 1, **caractérisé en ce que** le clapet (9) d'évacuation est un clapet anti-retour, par exemple comprenant un obturateur sollicité par un ressort.

3. Appareil selon la revendication 1 ou 2, **caractérisé en ce que** le second orifice (8) d'évacuation communique avec l'enceinte (13) via un ralentisseur (10) de flux configuré pour atténuer la vitesse et/ou l'intensité du flux de liquide évacué en limitant sa perte de charge.

4. Appareil selon la revendication 3, **caractérisé en ce que** le ralentisseur (10) de flux comprend au moins l'un parmi une buse de matériau poreux, un ensemble de trous de diffusion.

5. Appareil selon l'une quelconque des revendications 1 à 4, **caractérisé en ce que** le conduit d'évacuation comporte une portion s'étendant dans l'enceinte (13) parallèlement à la direction (A) longitudinale et/ou transversalement à la direction (A) longitudinale.

6. Appareil selon l'une quelconque des revendications 1 à 5, **caractérisé en ce que** le conduit (d'évacuation s'étend du bas vers le haut de l'enceinte (13).

7. Appareil selon l'une quelconque des revendications 1 à 6, **caractérisé en ce que** le secondorifice (8) d'évacuation communique avec l'enceinte (13) via plusieurs conduits d'évacuation débouchant dans l'enceinte (13).

8. Appareil selon l'une quelconque des revendications 1 à 7, **caractérisé en ce que** le récipient contient un bain constitué de liquide cryogénique, par exemple d'hydrogène liquéfié.

9. Procédé de pompage de fluide cryogénique utilisant un appareil selon l'une quelconque des revendications 1 à 8 dans lequel le récipient (13) contient un bain de fluide cryogénique liquéfié, le procédé comprenant, simultanément lors d'un premier mouvement du piston (5), une étape d'admission de liquide dans la première chambre (3) de compression via le système (2) d'admission et une étape de compression de fluide dans la seconde (4) chambre de compression, puis, lors d'un second mouvement opposé du piston (5), une étape d'admission de fluide dans la seconde (4) chambre de compression via le système (6) de transfert et une étape de compression du fluide dans la première chambre (3) de compression durant laquelle un surplus de fluide est évacué de la première chambre (3) de compression via le second orifice (8) d'évacuation.

## Patentansprüche

1. Mehrstufige Fluidkompressionsvorrichtung (1), umfassend einen dichten Behälter (13), der dazu bestimmt ist, ein Bad (16) aus kryogenem Fluid mit einer flüssigen Phase zu enthalten, wobei der obere Teil des Behälters (13) dazu bestimmt ist, ein Gaspolster zu enthalten, eine erste Kompressionskammer (3), eine zweite Kompressionskammer (4), ein Einlasssystem (2), das mit der ersten Kompressionskammer (3) in Verbindung steht und konfiguriert ist, um den Eintritt von zu komprimierendem Fluid in die besagte erste Kompressionskammer (3) zu ermöglichen, ein Transfersystem (6), das mit der ersten (3) und der zweiten (4) Kompressionskammer in Verbindung steht und konfiguriert ist, um den Transfer von Fluid von der ersten Kompressionskammer (3) zur zweiten Kompressionskammer (4) zu ermöglichen, einen beweglichen Kolben (5) zur Gewährleistung der Kompression des Fluids in der ersten (3) und zweiten (4) Kompressionskammer, wobei die Vorrichtung (1) ferner eine erste Auslassöffnung (7) umfasst, die mit der zweiten Kompressionskammer (4) in Verbindung steht und konfiguriert ist, um den Austritt von komprimiertem Fluid zu ermöglichen, wobei die zweite Kompressionskammer (4) durch einen Teil des Kolbenkörpers (5) und eine feste Wand der Vorrichtung begrenzt ist, wobei der Kolben (5) in einer Längsrichtung (A) translatorisch beweglich ist, wobei das Einlasssystem (2) ein oder mehrere Ventile (2) umfasst, die konfiguriert sind, um den Eintritt von zu komprimierendem Fluid in die erste Kompressionskammer (3) während einer Einlassphase sicherzustellen und den Austritt von Fluid während einer Kompressionsphase zu verhindern, wobei die Vorrichtung ferner eine zweite Auslassöffnung (8) umfasst, die eine Verbindung zwischen der ersten Kompressionskammer (3) und dem Bad (16) ermöglicht, um einen Überschuss an Flüssigkeit, der in der ersten Kompressionskammer (3) während einer Kompressionsbewegung des Kolbens (5) in der ersten Kompressionskammer (3) eingeschlossen ist, abzulassen, wobei die Vorrichtung **dadurch gekennzeichnet ist, dass** sie ein Auslassventil (9) umfasst, das konfiguriert ist, um den Auslass von Flüssigkeit über die zweite Auslassöffnung (8) zu steuern und den Eintritt von Fluid in die Kompressionskammer (3) über die zweite Auslassöffnung (8) zu verhindern, und dass die zweite Auslassöffnung (8) mit dem Behälter (13) über mindestens eine Auslassleitung in Verbindung steht, die in den Behälter (13) im Bad (16) mündet, um im und/oder über dem Bad des Behälters (13) angeordnet zu sein.

2. Vorrichtung nach Anspruch 1, **dadurch gekennzeichnet, dass** das Auslassventil (9) ein Rückschlagventil ist, das beispielsweise einen von einer Feder vorgespannten Verschlusskörper umfasst.

3. Vorrichtung nach Anspruch 1 oder 2, **dadurch gekennzeichnet, dass** die zweite Auslassöffnung (8) mit dem Behälter (13) über eine Strömungsdrossel (10) in Verbindung steht, die konfiguriert ist, um die Geschwindigkeit und/oder die Intensität des abgelassenen Flüssigkeitsstroms durch Begrenzung seines Druckverlustes zu dämpfen.

4. Vorrichtung nach Anspruch 3, **dadurch gekennzeichnet, dass** die Strömungsdrossel (10) mindestens eines aus einer Düse aus porösem Material und einer Anordnung von Diffusionslöchern umfasst.

5. Vorrichtung nach einem der Ansprüche 1 bis 4, **dadurch gekennzeichnet, dass** die Auslassleitung einen Abschnitt aufweist, der sich im Behälter (13) parallel zur Längsrichtung (A) und/oder quer zur Längsrichtung (A) erstreckt.

6. Vorrichtung nach einem der Ansprüche 1 bis 5, **dadurch gekennzeichnet, dass** sich die Auslassleitung von unten nach oben im Behälter (13) erstreckt.

7. Vorrichtung nach einem der Ansprüche 1 bis 6, **dadurch gekennzeichnet, dass** die zweite Auslassöffnung (8) mit dem Behälter (13) über mehrere Auslassleitungen in Verbindung steht, die in den Behälter (13) münden.

8. Vorrichtung nach einem der Ansprüche 1 bis 7, **dadurch gekennzeichnet, dass** der Behälter ein Bad enthält, das aus kryogener Flüssigkeit, beispielsweise verflüssigtem Wasserstoff, besteht.

9. Verfahren zum Pumpen eines kryogenen Fluids unter Verwendung einer Vorrichtung nach einem der Ansprüche 1 bis 8, bei dem der Behälter (13) ein Bad aus verflüssigtem kryogenem Fluid enthält, wobei das Verfahren gleichzeitig während einer ersten Bewegung des Kolbens (5) einen Schritt des Einlassens von Flüssigkeit in die erste Kompressionskammer (3) über das Einlasssystem (2) und einen Schritt der Kompression von Fluid in der zweiten Kompressionskammer (4) umfasst, dann während einer zweiten entgegengesetzten Bewegung des Kolbens (5) einen Schritt des Einlassens von Fluid in die zweite Kompressionskammer (4) über das Transfersystem (6) und einen Schritt der Kompression des Fluids in der ersten Kompressionskammer (3), während dessen ein Überschuss an Fluid aus der ersten Kompressionskammer (3) über die zweite Auslassöffnung (8) abgelassen wird.

## Claims

1. A multi-stage fluid compression apparatus (1) comprising a sealed enclosure (13) intended to contain a bath (16) of cryogenic fluid having a liquid phase, the upper part of the enclosure (13) being intended to contain a gaseous ullage, a first compression chamber (3), a second compression chamber (4), an intake system (2) communicating with the first compression chamber (3) configured to allow the entry of fluid to be compressed into said first compression chamber (3), a transfer system (6) communicating with the first (3) and the second (4) compression chamber and configured to allow the transfer of fluid from the first compression chamber (3) to the second compression chamber (4), a movable piston (5) for ensuring the compression of the fluid in the first (3) and second (4) compression chambers, the apparatus (1) further comprising a first discharge orifice (7) communicating with the second compression chamber (4) and configured to allow the exit of compressed fluid, the second compression chamber (4) being delimited by a portion of the body of the piston (5) and a fixed wall of the apparatus, the piston (5) being movable in translation along a longitudinal direction (A), wherein the intake system (2) comprises one or more valves (2) configured to ensure the entry of fluid to be compressed into the first compression chamber (3) during an intake phase and to prevent the exit of fluid during a compression phase, the apparatus further comprising a second discharge orifice (8) allowing communication between the first compression chamber (3) and the bath (16) to let out a surplus of liquid trapped in the first compression chamber (3) during a compression movement of the piston (5) in the first compression chamber (3), the apparatus being **characterized in that** it comprises a discharge valve (9) configured to control the discharge of liquid via the second discharge orifice (8) and to prevent the entry of fluid into the compression chamber (3) via the second discharge orifice (8), and **in that** the second discharge orifice (8) communicates with the enclosure (13) via at least one discharge duct opening into the enclosure (13) in the bath (16) to be located in and/or above the bath of the enclosure (13).

2. The apparatus according to claim 1, **characterized in that** the discharge valve (9) is a non-return valve, for example comprising an obturator biased by a spring.

3. The apparatus according to claim 1 or 2, **characterized in that** the second discharge orifice (8) communicates with the enclosure (13) via a flow restrictor (10) configured to attenuate the speed and/or intensity of the discharged liquid flow by limiting its pressure drop.

4. The apparatus according to claim 3, **characterized in that** the flow restrictor (10) comprises at least one from among a nozzle of porous material and a set of diffusion holes.

5. The apparatus according to any one of claims 1 to 4, **characterized in that** the discharge duct comprises a portion extending in the enclosure (13) parallel to the longitudinal direction (A) and/or transversely to the longitudinal direction (A).

6. The apparatus according to any one of claims 1 to 5, **characterized in that** the discharge duct extends from the bottom towards the top of the enclosure (13).

7. The apparatus according to any one of claims 1 to 6, **characterized in that** the second discharge orifice (8) communicates with the enclosure (13) via several discharge ducts opening into the enclosure (13).

8. The apparatus according to any one of claims 1 to 7, **characterized in that** the vessel contains a bath consisting of cryogenic liquid, for example liquefied hydrogen.

9. A method for pumping a cryogenic fluid using an apparatus according to any one of claims 1 to 8 in which the vessel (13) contains a bath of liquefied cryogenic fluid, the method comprising, simultaneously during a first movement of the piston (5), a step of admitting liquid into the first compression chamber (3) via the intake system (2) and a step of compressing fluid in the second compression chamber (4), then, during a second opposite movement of the piston (5), a step of admitting fluid into the second compression chamber (4) via the transfer system (6) and a step of compressing the fluid in the first compression chamber (3) during which a surplus of fluid is discharged from the first compression chamber (3) via the second discharge orifice (8).
